# EUROPÄISCHE PATENTSCHRIFT

(11) **EP 2 215 989 B1**
(45) Veröffentlichungstag und Bekanntmachung des Hinweises auf die Patenterteilung: **26.06.2019**
(21) Anmeldenummer: 09405021.8
(22) Anmeldetag: 05.02.2009
(51) Int. Cl.: A61C 8/00

(54) **Aufbauteil für ein Dentalimplantat**
Assembly section for a dental implant
Elément de montage pour un implant dentaire

(43) Veröffentlichungstag der Anmeldung: 11.08.2010
(73) Patentinhaber: Ivoclar Vivadent AG, 9494 Schaan (LI)
(72) Erfinder: Boehlen, Reto, 3115 Gerzensee (CH)
(74) Vertreter: Fraefel, Christoph

(56) Entgegenhaltungen:
- WO-A1-98/52488
- WO-A1-2004/080328
- DE-A1-102006 005 667

## Beschreibung

Die vorliegende Erfindung betrifft ein Aufbauteil für ein Dentalimplantat gemäss Anspruch 1, und ein Dentalimplantatsystem umfassend das Aufbauteil und das Dentalimplantat gemäss Anspruch 13.

Zwei- oder mehrteilige Dentalimplantatsysteme sind im Gebiet der dentalen Implantologie bestens bekannt. Solche Systeme umfassen in der Regel ein ein Aussengewinde aufweisendes Dentalimplantat, welches dazu bestimmt ist, im Knochen des Patienten verankert zu werden, und ein Aufbauteil (auch Sekundärteil oder "Abutment" genannt), welches als Basis für die prothetische Konstruktion dient. Häufig wird dabei das Aufbauteil in einer entsprechenden koronalen, d.h. im implantierten Zustand der Zahnkrone zugewandten Öffnung des Dentalimplantats eingesetzt.

Ein sich bei solchen mehrteiligen Dentalimplantatsystemen häufig stellendes Problem stellt die korrekte Positionierung des Aufbauteils im Dentalimplantat dar. Diesem Problem wurde etwa in folgenden Dokumenten des Standes der Technik Rechnung getragen:
US-B-5,281,140 offenbart ein zweiteiliges Aufbauteil. Dieses umfasst einen ersten Teil, der an seinem unteren Ende derart ausgestaltet ist, um in einer komplementären Öffnung des Dentalimplantats aufgenommen zu werden, und der an seinem oberen Ende einen Vorsprung mit einer Vielzahl an Seitenflächen aufweist, um in einer komplementären Öffnung eines zweiten Teils des Aufbauteils aufgenommen wird.

Allerdings weist die in dieser Druckschrift beschriebene Lösung vor allem aufgrund der relativ grossen Anzahl an Einzelteilen Nachteile hinsichtlich der Sterilität und der Stabilität der Verbindung zwischen dem Aufbauteil und dem Dentalimplantat auf.

Ausgehend davon wurde in EP-A-1728486 ein Aufbauteil zur Verwendung in einem Dentalimplantatsystem vorgeschlagen, welches Mittel zur Führung und Arretierung des Aufbauteils im Dentalimplantat aufweist. Besagte Mittel umfassen einen Bereich mit Verdrehsicherungsmitteln. Diese Verdrehsicherungsmittel umfassen eine sich bezüglich der Achse des Aufbauteils radial erstreckende Oberfläche, welche in einer Weise ausgestaltet ist, um mit dem Dentalimplantat derart zusammenzuwirken, dass das Aufbauteil beim Einführen in das Dentalimplantat geführt wird.

Ein Zahnimplantat zum Einsatz in den menschlichen Kieferknochen mit rotationssichernden Elementen wird in DE 10 2006 005667 A1 offenbart. Dieses Implantat ist mit einer zu einem distalen Ende hin offenen zylindrischen Bohrung versehen, die zur Aufnahme eines Längsabschnitts eines Abutments ausgelegt ist, wobei ein dem distalen Ende benachbarter erster Längsabschnitt der Bohrung eine erste zylindrische Führungsfläche aufweist. Dabei sind im Bereich des ersten Längsabschnitts zumindest zwei Nocken vorgesehen, die radial nach innen ragen und jeweils eine konzentrisch zur ersten Führungsfläche liegende zweite Führungsfläche aufweisen.

Im Weiteren wird in CA-A-2596988 ein Aufbauteil beschrieben, welches in seinem apikalen Bereich eine ein Indexierungselement bildende Nut zur Festlegung der Rotationsposition zum Dentalimplantat aufweist.

Sowohl die in der EP-A-1728486 als auch die in der CA-A-2596988 beschriebene Lösung ist für ein herkömmliches Dentalimplantatsystem auf der Basis von Metallen, wie z.B. Titan, ausgerichtet. Hingegen ist bei einer Verbindung gemäss diesen Dokumenten das Material des Dentalimplantatsystems einer relativ hohen Beanspruchung ausgesetzt, so dass sich insbesondere bei Dentalimplantatsystemen, die ein keramisches Material wie etwa Zirkonoxid umfassen, das Problem ergibt, dass das Dentalimplantatsystem beschädigt werden kann. Dies ist insbesondere dann der Fall, wenn die auf das Dentalimplantatsystem wirkenden Kräfte bezüglich dessen Achse schräg einwirken.

Aufgabe der vorliegenden Erfindung ist es somit, ein Aufbauteil zur Verfügung zu stellen, welches verdrehsicher mit einem entsprechenden Dentalimplantat verbunden werden kann und gleichzeitig gewährleistet, dass die Beanspruchung des Materials des Dentalimplantatsystems selbst bei bezüglich dessen Achse schräg einwirkenden Kräften relativ gering gehalten werden kann.

Die Aufgabe wird erfindungsgemäss gelöst durch ein Aufbauteil gemäss Anspruch 1. Bevorzugte Ausführungsformen sind in den abhängigen Ansprüchen definiert.

Das Aufbauteil der vorliegenden Erfindung weist ein apikales, d.h. im implantierten Zustand des Dentalimplantatsystems dem Knochen zugewandtes Ende und ein dem apikalen Ende in Längsrichtung gegenüberliegend angeordnetes koronales, d.h. im implantierten Zustand des Dentalimplantatsystems der Zahnkrone zugewandtes Ende auf. Im Bereich des apikalen Endes weist das Aufbauteil einen Aufnahmeabschnitt auf, der dazu bestimmt ist, von einer Öffnung des Dentalimplantats aufgenommen zu werden. Dieser weist ein Verdrehsicherungssegment, das mindestens ein Verdrehsicherungselement umfasst, welche dazu bestimmt ist, mit einem entsprechenden Verdrehsicherungsgegenelement des Dentalimplantats zusammenzuwirken und somit eine Verdrehsicherung zwischen Aufbauteil und Dentalimplantat zu gewährleisten.

Das Verdrehsicherungselement umfasst eine Nut, die sich von dem dem apikalen Ende zugewandten Rand des Verdrehsicherungssegments in koronaler Längsrichtung mit im Wesentlichen konstanter Nutenbreite über einen Nutenabschnitt erstreckt. Erfindungsgemäss wird die Nut in einem an den Nutenabschnitt anschliessenden Übergangsabschnitt kontinuierlich aufgeweitet und geht in einem an den Übergangsabschnitt anschliessenden Anfasungsabschnitt in eine Anfasung über. In der Regel weist die Nut im Nutenabschnitt einen konstanten Querschnitt auf; bei dem bevorzugten rechteckigen Nutenquerschnitt weist die Nut somit nebst konstanter Nutenbreite auch eine konstante Nutentiefe auf.

Im Zusammenhang der vorliegenden Erfindung wird unter einer Anfasung eine ebene Fläche verstanden, wie sie etwa beim Anfräsen eines zylinderförmigen Körpers erhalten wird. Da in der Regel das Verdrehsicherungssegment des erfindungsgemässen Aufbauteils eine kreiszylinderförmige Grundform aufweist, beschreibt die Anfasung im Querschnitt eine Gerade, die die im Querschnitt kreisbogenförmigen Abschnitte der benachbarten kreiszylinderförmigen Mantelabschnitte verbinden. In der Regel verläuft die Ebene der Anfasung parallel zur Längsrichtung des Aufbauteils bzw. dessen Verdrehsicherungssegments.

Die erfindungsgemässe Ausgestaltung erlaubt es nun, das Aufbauteil mit dem Dentalimplantat in einer Weise verdrehsicher zu verbinden, dass die auf das Dentalimplantatsystem wirkenden Spannungen optimal verteilt werden, wodurch die Materialbeanspruchung gering gehalten und eine hohe Stabilität des Dentalimplantatsystems erreicht wird.

Die Nut der vorliegenden Erfindung weist nebst der Nutengrundfläche jeweils zwei Nutenseitenflächen auf. Diese bilden zusätzliche Anschlagsflächen des Verdrehsicherungselements und gewährleisten eine Verdrehsicherung mit wesentlich weniger Spiel, als dies bei einer blossen Anfasung der Fall wäre.

In der Regel handelt es sich beim Verdrehsicherungsgegenelement des Dentalimplantats um einen in Richtung gegen das Innere der Öffnung des Dentalimplantats gerichteten Vorsprung. Dieser ist vorzugsweise in Form einer in Längs- oder Achsrichtung verlaufenden Schiene ausgebildet.

Der Nutenbreite im Nutenabschnitt ist dabei vorzugsweise derart, dass die Seitenflächen der Nut an der jeweiligen Seitenfläche des Vorsprungs wenigstens annähernd direkt aufliegen.

Im Sinne einer möglichst einfachen und mit einer Vielzahl an Dentalimplantaten kompatiblen Ausgestaltung des Aufbauteils ist wenigstens der Nutenabschnitt vorzugsweise zylinderförmig ausgestaltet.

Weiter ist im Sinne einer möglichst einfachen Ausgestaltung bevorzugt, dass die Grundfläche der Nut und die Anfasung in derselben Ebene liegen. Dies erlaubt eine sehr einfache und äusserst stabile Verdrehsicherung.

Zudem ist bevorzugt, dass die kontinuierliche Aufweitung der Nutenbreite im Übergangsabschnitt im Wesentlichen symmetrisch erfolgt, wodurch eine optimale Verminderung der Materialbeanspruchung erhalten wird.

Es wurde festgestellt, dass gemäss einer weiteren bevorzugten Ausführungsform die Anfasung des erfindungsgemässen Aufbauteils nicht bis zu dem dem koronalen Ende zugewandten Rand des Verdrehsicherungssegments ausgebildet ist, was weiter eine hohe Stabilität der Verbindung zwischen Aufbauteil und Dentalimplantat gewährleistet. Aufgrund seiner in der Regel kreiszylinderförmigen Grundform ist das Verdrehsicherungssegment in seinem dem koronalen Ende zugewandten Randbereich somit in dieser Ausführungsform ebenso kreiszylinderförmig ausgestaltet.

In der Regel umfasst das Verdrehsicherungssegment des erfindungsgemässen Aufbauteils mehr als ein Verdrehsicherungselement, vorzugsweise zwei oder vier Verdrehsicherungselemente. Insbesondere ist bevorzugt, dass zwei Nuten einander diametral gegenüberliegend angeordnet sind und dazwischen diametral einander gegenüberliegende zusätzliche Anfasungen als zusätzliche Verdrehsicherungselemente angeordnet sind. Wie im Zusammenhang mit den Figuren gezeigt ist, wurde überraschenderweise festgestellt, dass in einem Dentalimplantatsystem, welche ein Aufbauteil gemäss dieser bevorzugten Ausführungsform umfasst, die maximale Materialbeanspruchung erheblich geringer ist, als in einem Dentalimplantatsystem mit einem nicht erfindungsgemässen Aufbauteil. Im Übrigen wurde festgestellt, dass hinsichtlich der auf das Verdrehsicherungssegment wirkenden maximalen Beanspruchung diese beim erfindungsgemässen Aufbauteil im Bereich zwischen den Verdrehsicherungselementen liegt, während diese beim nicht erfindungsgemässen Aufbauteil im Bereich eines Verdrehsicherungselements liegt. Auch dies trägt massgeblich zur erfindungsgemäss erhaltenen erhöhten Stabilität des Dentalimplantatsystems bei.

In der Regel erfolgt die Befestigung des Aufbauteils am Dentalimplantat mittels eines Befestigungselements. Dazu weist das erfindungsgemässe Aufbauteil in der Regel eine sich vom koronalen Ende zum apikalen Ende hin erstreckende Ausnehmung auf, die derart ausgestaltet ist, dass sie das Befestigungselement aufnehmen kann. Vorzugsweise weist die Ausnehmung eine radial in Richtung gegen das Innere ragende Auflagefläche auf, die dazu bestimmt ist, mit einer entsprechenden Gegenauflagefläche des Befestigungselements zusammenzuwirken. Vorzugsweise ist die Auflagefläche konisch ausgeformt, wodurch bei Vorliegen einer entsprechenden konischen Gegenauflagefläche des Befestigungselements gewährleistet wird, dass zwischen Aufbauteil und Befestigungselement möglichst wenig Spiel vorliegt. Bevorzugt liegt der Konuswinkel der konischen Auflagefläche im Bereich von 20 bis 40°, besonders bevorzugt beträgt er ca. 30°.

Im Übrigen hat sich gezeigt, dass mindestens diese konische Auflagefläche vorteilhafterweise eine Oberflächenrauigkeit Ra (gemäss EN ISO 4287) im Bereich von 0.1 bis 0.15 aufweist. In diesem Bereich der Oberflächenrauigkeit werden einerseits ausreichende Reibwerte zwischen den Auflageflächen der zu verbindenden Teile gewährleistet, andererseits kann das Spiel zwischen diesen Teilen relativ gering gehalten werden, was in einer hohen Ermüdungsfestigkeit resultiert.

Zusätzlich zum beschriebenen Aufbauteil betrifft die vorliegende Offenbarung im Weiteren ein Dentalimplantat mit einer Öffnung zur Aufnahme des Aufnahmeabschnitts des beschriebenen Aufbauteils, wobei das Dentalimplantat mindestens einen ins Innere der Öffnung ragenden, ein Verdrehsicherungsgegenelement bildenden Vorsprung aufweist, der dazu bestimmt ist, mit einem entsprechenden Verdrehsicherungselement des Aufbauteils zusammenzuwirken. Im Weiteren umfasst die Erfindung ein Dentalimplantatsystem umfassend das Aufbauteil und das Dentalimplantat.

Obschon sich aufgrund der Vorteile der vorliegenden Erfindung diese sich insbesondere für ein Dentalimplantatsystem eignet, das ein keramisches Material umfasst, ist die Erfindung selbstverständlich auch für Dentalimplantatsysteme aus jedem anderen für Dentalimplantatsysteme geeigneten Material geeignet, insbesondere einem Metall wie Titan, Zirkon, Gold und jedem weiteren dem Fachmann als geeignet bekannten Metall.

Die Erfindung wird anhand der angefügten Figuren im Detail beschrieben.

Es zeigt:
- Fig. 1: eine Seitenansicht eines erfindungsgemässen geraden Aufbauteils;
- Fig. 2: einen auf das erfindungsgemässe Verdrehsicherungselement fokussierten, vergrösserten Ausschnitt aus Fig. 1;
- Fig. 3: das Aufbauteil gemäss Fig. 1 im Querschnitt durch die Schnittebene III-III';
- Fig. 4: das Aufbauteil gemäss Fig. 1 im Querschnitt durch die Schnittebene IV-IV';
- Fig. 5: eine weitere Seitenansicht des Aufbauteils gemäss Fig. 1 aus gegenüber Fig. 1 um ca. 135° in Umlaufrichtung um die Achse verschobener Ansichtsrichtung;
- Fig. 6: eine weitere Seitenansicht des Aufbauteils gemäss Fig. 1 aus gegenüber Fig. 5 um ca. 90° in Umlaufrichtung um die Achse verschobener Ansichtsrichtung;
- Fig. 7: einen Längsschnitt durch das Aufbauteil gemäss den Fig.s 1, 5 und 6 durch die Schnittebene VII-VII' ;
- Fig. 8: einen Längsschnitt durch das Aufbauteil gemäss den Fig.s 1, 5 und 6 durch die Schnittebene VIII-VIII';
- Fig. 9: eine Seitenansicht eines erfindungsgemässen angewinkelten Aufbauteils;
- Fig. 10: eine perspektivische Darstellung eines Abschnitts eines erfindungsgemässen Aufbauteils, welches mit einem andeutungsweise dargestellten Dentalimplantat verbunden ist;
- Fig. 11: eine das Verdrehsicherungssegment umfassende Detailansicht des mit dem Dentalimplantat verbundenen Aufbauteils gemäss Fig. 10 aus anderer Perspektive;
- Fig. 12: eine perspektivische Darstellung eines Abschnitts eines Aufbauteils gemäss einem Vergleichsbeispiel, wobei in der Darstellung die maximale lokale Materialbeanspruchung im Schulterabschnitt unter definierter Krafteinwirkung angegeben ist;
- Fig. 13: eine perspektivische Darstellung eines Abschnitts eines erfindungsgemässen Aufbauteils, welches mit einem andeutungsweise dargestellten Dentalimplantat verbunden ist, wobei in der Darstellung die maximale lokale Materialbeanspruchung im Schulterabschnitt unter definierter Krafteinwirkung angegeben ist;
- Fig. 14: eine perspektivische Darstellung eines Abschnitts eines Aufbauteils gemäss dem Vergleichsbeispiel der Fig. 12, wobei in der Darstellung die maximale lokale Materialbeanspruchung im apikalen Einführabschnitt unter definierter Krafteinwirkung angegeben ist;
- Fig. 15: eine perspektivische Darstellung eines Abschnitts des erfindungsgemässen Aufbauteils gemäss Fig. 13, wobei in der Darstellung die maximale lokale Materialbeanspruchung im apikalen Einführabschnitt unter definierter Krafteinwirkung angegeben ist;
- Fig. 16: eine perspektivische Darstellung des Verdrehsicherungssegments des Aufbauteils gemäss dem Vergleichsbeispiel der Fig. 12, wobei in der Darstellung die maximale lokale Materialbeanspruchung unter definierter Krafteinwirkung angegeben ist; und
- Fig. 17: eine perspektivische Darstellung des Verdrehsicherungssegments des erfindungsgemässen Aufbauteils gemäss Fig. 13, wobei in der Darstellung die maximale lokale Materialbeanspruchung unter definierter Krafteinwirkung angegeben ist.

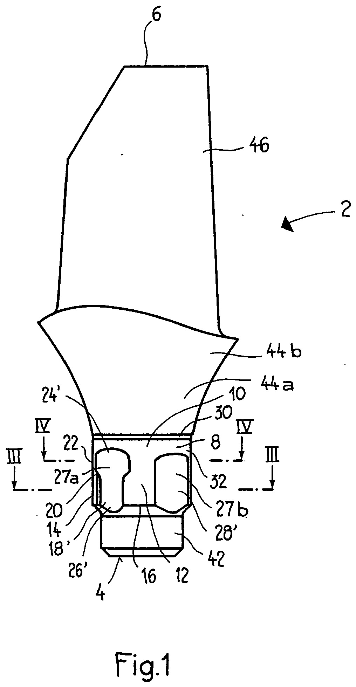

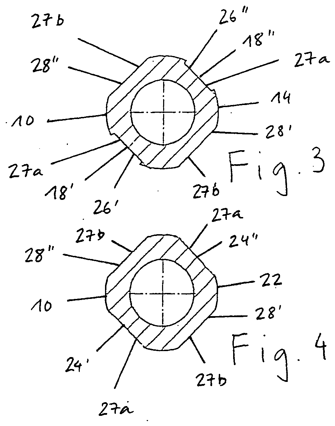

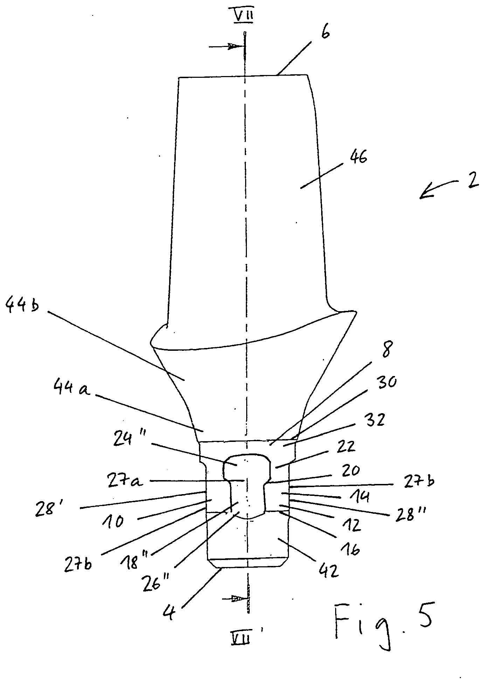

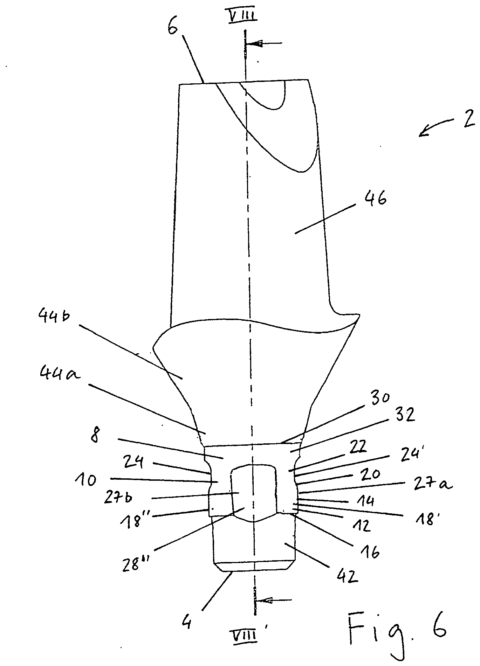

Wie insbesondere aus den Fig. 1 und 5 bis 8 ersichtlich ist, weist das Aufbauteil 2 der vorliegenden Erfindung ein apikales, d.h. im implantierten Zustand zum Knochen hin zugewandtes Ende 4 und ein dem apikalen Ende gegenüberliegend angeordnetes koronales Ende 6 auf. Im Bereich des apikalen Endes 4 weist das Aufbauteil 2 einen Aufnahmeabschnitt 8 auf, der dazu bestimmt ist, in einer Öffnung eines Dentalimplantats aufgenommen zu werden. Der Aufnahmeabschnitt 8 umfasst ein Verdrehsicherungssegment 10, welches in seinem dem apikalen Ende zugewandten Randbereich 12 einen Nutenabschnitt 14 aufweist. In der in den Figuren gezeigten Ausführungsform weist der Nutenabschnitt 14 zwei sich vom apikalen Rand 16 des Verdrehsicherungssegments 10 in Längsrichtung erstreckende, sich diametral einander gegenüberliegende Nuten 18', 18" mit im Wesentlichem konstantem Querschnitt auf, wie etwa aus Fig. 3 ersichtlich ist. An den Nutenabschnitt 14 schliesst in koronaler Richtung ein Übergangsabschnitt 20 an, in dem die Breite der Nut 18' bzw. 18" kontinuierlich aufgeweitet wird, um in eine in einem an den Übergangsabschnitt 20 anschliessenden Anfasungsabschnitt 22 liegende Anfasung 24' bzw. 24" überzugehen. Die Grundfläche 26' bzw. 26" der Nut 18' bzw. 18" und die Anfasung 24' bzw. 24'' liegen in der gezeigten Ausführungsform in derselben Ebene. Die Aufweitung der Breite der Nut 18' bzw. 18'' im Übergangsabschnitt 20 erfolgt in der gezeigten Ausführungsform symmetrisch und zwar derart, dass die Nut 18' bzw. 18'' im Profil einen kelchförmigen Verlauf beschreibt. Die Nut bildet mit der anschliessenden Anfasung ein Verdrehsicherungselement 27a.

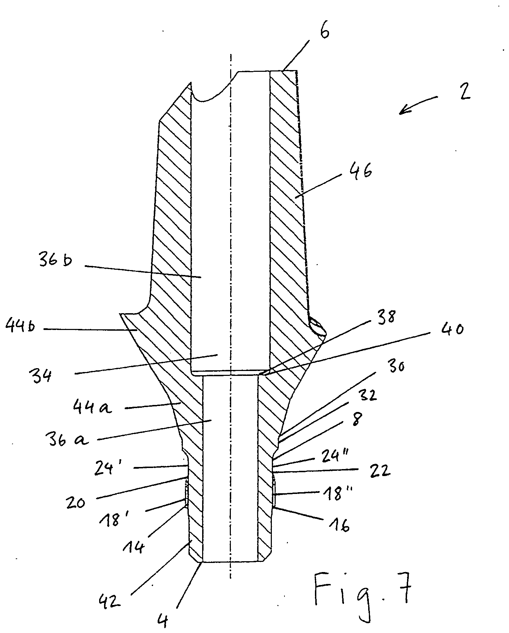

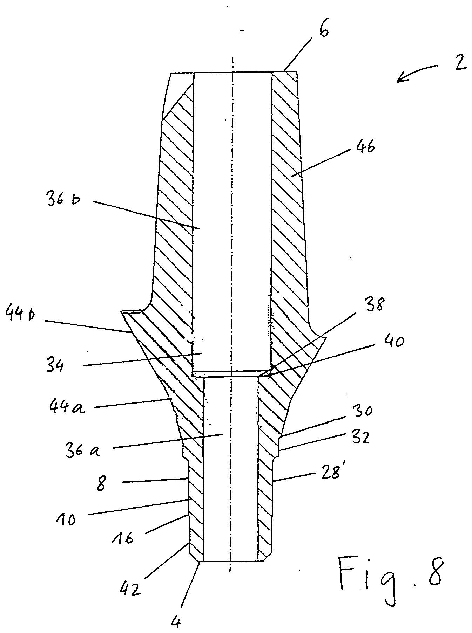

Zwischen den Nuten 18', 18" sind zwei sich ebenfalls diametral einander gegenüberliegend angeordnete, zusätzliche Anfasungen 28', 28" angeordnet, die sich vom apikalen Rand 16 des Verdrehsicherungssegments in Längsrichtung erstrecken und jeweils ein weiteres Verdrehsicherungselement 27b bilden. Diese zusätzlichen Anfasungen 28', 28" reichen in Längsrichtung etwas weniger weit als die an die Nuten anschliessenden Anfasungen 24', 24". Weder die zwischen den Nuten 18', 18'' angeordneten Anfasungen 28', 28" noch die an die Nuten anschliessenden Anfasungen 24', 24" sind in der gezeigten Ausführungsform bis zu dem dem koronalen Ende 6 zugewandten Rand 30 des Verdrehsicherungssegments 10 ausgebildet. Wie insbesondere aus den Fig. 7 und 8 ersichtlich ist, verläuft der Übergang von den Anfasungen 24', 24'' bzw. 28', 28'' in den dem koronalen Ende zugewandten Randbereich 32 im Längsschnitt bogenförmig. Besagter koronale Randbereich 32 ist kreiszylinderförmig ausgebildet.

In der gezeigten Ausführungsform beträgt das Verhältnis der Ausdehnung des Nutenabschnitts 14 in Längsrichtung zur Ausdehnung des Übergangsabschnitt 20 in Längsrichtung ca. 2:1 und das Verhältnis der Ausdehnung des Nutenabschnitts 14 in Längsrichtung zur Ausdehnung des Anfasungsabschnitt 22 in Längsrichtung ca. 1:1. Denkbar ist aber auch jedes andere für die Zwecke der vorliegenden Erfindung geeignete Verhältnis.

Wie insbesondere aus Figs. 7 und 8 ersichtlich ist, weist das Aufbauteil 2 eine sich vom koronalen Ende 6 zum apikalen Ende 4 hin erstreckende Ausnehmung 34 auf. Diese umfasst einen ersten dem apikalen Ende 4 zugewandten und einen zweiten dem koronalen Ende 6 zugewandten Ausnehmungsabschnitt 36a bzw. 36b auf. Zwischen dem ersten Ausnehmungsabschnitt 36a und dem zweiten Ausnehmungsabschnitt 36b weist die Ausnehmung 34 einen radial in Richtung gegen das Innere ragenden Vorsprung 38 auf, welcher eine Auflagefläche 40 bildet, die dazu bestimmt ist, mit einer entsprechenden Gegenauflagefläche des Befestigungselements zusammenzuwirken. In der gezeigten Ausführungsform liegt die Auflagefläche 40 in einer rechtwinklig zur Längsachse verlaufenden Ebene. Denkbar ist aber insbesondere auch, dass die Auflagefläche konisch ausgebildet ist.

Wie insbesondere aus den Fig.s 1 und 5 bis 8 ersichtlich ist, schliesst in apikaler Richtung an das Verdrehsicherungssegment 10 ein kreiszylinderförmiger Einführabschnitt 42, der ein gegenüber dem Verdrehsicherungssegment 10 geringerer Durchmesser aufweist und dessen Kanten abgerundet sind. In koronaler Richtung zum Verdrehsicherungssegment 10 ist ein sich konisch aufweitender erster Schulterabschnitt 44a angeordnet, der in einen sich ebenfalls konisch aufweitenden zweiten Schulterabschnitt 44b mit gegenüber dem ersten Schulterabschnitt 44a grösserem Konuswinkel übergeht.

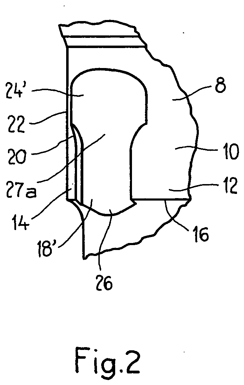

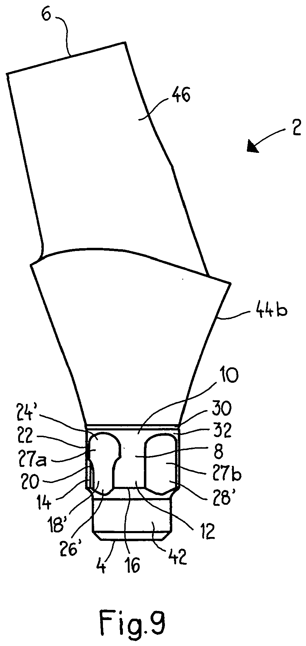

Die in Fig. 9 gezeigte Ausführungsform unterscheidet sich von jener gemäss den Fig.s 1 bis 8 in erster Linie darin, dass der an den zweiten Schulterabschnitt 44b in koronaler Richtung anschliessende Aufbauabschnitt 46 bezüglich der Längsachse schräg ausgebildet ist. Im Übrigen wird der unterschiedlichen Ausrichtung des Aufbauabschnitts 46 gemäss Fig. 9 dadurch Rechnung getragen, dass die Anfasungen 24', 28' sich in koronaler Richtung weiter erstrecken als gemäss den Fig. 1 bis 8.

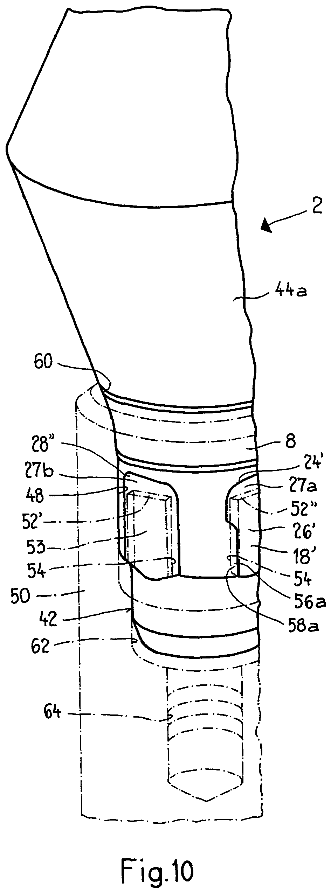

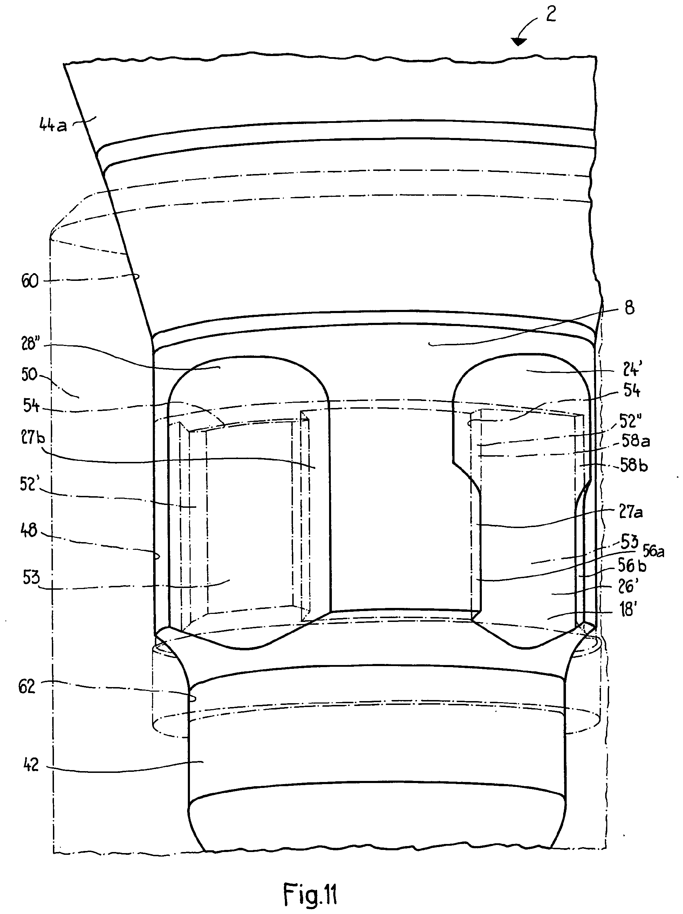

Wie insbesondere aus den Fig. 10 und 11 ersichtlich ist, wird das Aufbauteil 2 bzw. dessen Aufnahmeabschnitt 8 in eine komplementäre koronale Öffnung 48 des Dentalimplantats 50 eingesetzt. Das Dentalimplantat 50 weist in der gezeigten Ausführungsform vier Vorsprünge auf, von welchen zwei (52', 52") gezeigt sind und welche als Verdrehsicherungsgegenelement 53 mit dem jeweiligen Verdrehsicherungselement 27a bzw. 27b des Aufbauteils 2 zusammenwirken. Dabei liegt die Oberfläche 54 der Vorsprünge 52', 52" wenigstens annähernd direkt auf der Anfasung 28'' bzw. der Nutengrundfläche 26' und der anschliessenden Anfasung 24' des jeweiligen Verdrehsicherungselements 27b bzw. 27a auf. An dem die Nut 18' umfassenden Verdrehsicherungselement 27a liegen die Seitenflächen 56a, 56b der Nut 18' an der jeweiligen Seitenfläche 58a, 58b des Vorsprungs 52" wenigstens annähernd direkt auf.

Entsprechend dem ersten Schulterabschnitt 44a des Aufbauteils 2 ist der innenwandseitige Randbereich 60 der Öffnung 48, auf welchem der Schulterabschnitt aufliegt, ebenfalls konisch ausgeformt.

An den die Vorsprünge 52', 52" umfassenden Bereich der koronalen Öffnung 48 schliesst in apikaler Richtung ein im Wesentlichen kreiszylinderförmiger Öffnungsabschnitt 62 an, in dem der kreiszylinderförmige Einführabschnitt 42 des Aufbauteils 2 aufgenommen wird. Apikal zu diesem kreiszylinderförmigen Öffnungsabschnitt 62 wiederum ist ein Innengewindeabschnitt 64 ausgeformt, der dazu bestimmt ist, mit einem entsprechenden Aussengewinde eines Befestigungselements (nicht gezeigt) zur Befestigung des Aufbauteils 2 am Dentalimplantat 50 zusammenzuwirken, wie insbesondere aus Fig. 10 ersichtlich ist.

Die bei einer in einem Winkel von 30° bezüglich der Längsachse einwirkenden definierten Kraft bestimmte Materialbeanspruchung des Aufbauteils ist in den Fig.s 12 bis 17 wiedergegeben. Dabei wird gemäss den Fig.s 13 und 15 für das Aufbauteil der vorliegenden Erfindung im Schulterabschnitt bzw. im Einführabschnitt eine als 100% definierte maximale Spannung festgestellt, die wesentlich tiefer liegt als in den entsprechenden Abschnitten des Vergleichsbeispiel gemäss Fig.s 12 bzw. 14, die in Relation zu vorgenannter Spannung bei 124% liegt.

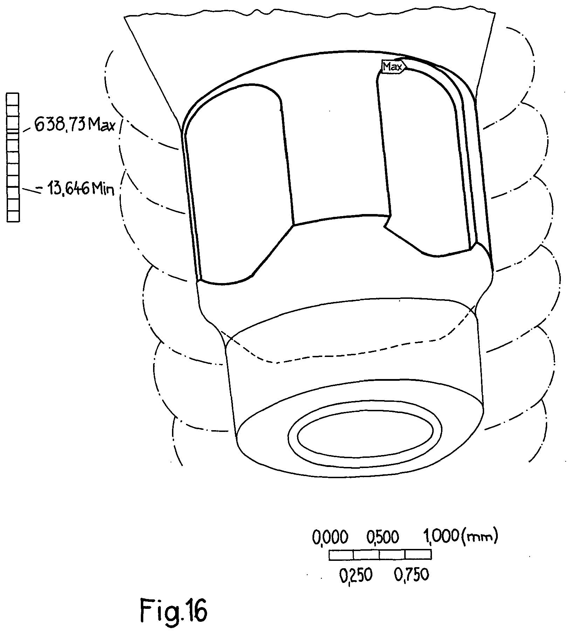

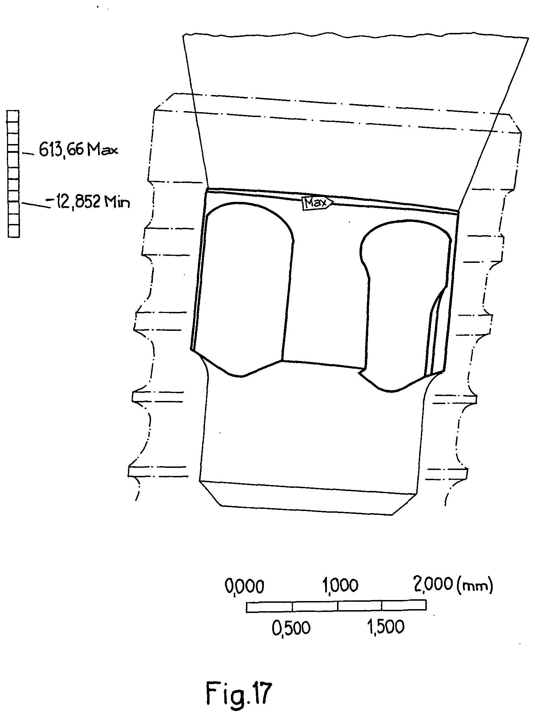

Gemäss Fig. 17 im Vergleich zu Fig. 16 ist auch die maximale Materialbeanspruchung im Verdrehsicherungssegment mit einem Wert von 37.9% wesentlich tiefer, als die betreffende Materialbeanspruchung im Vergleichsbeispiel (39.5%). Im Übrigen zeigt Fig. 17, dass die maximale Materialbeanspruchung im koronalen Randbereich des Verdrehsicherungssegments vorliegt und nicht im Bereich des Verdrehsicherungselements, wie dies gemäss dem in Fig. 16 gezeigten Vergleichsbeispiel der Fall ist.

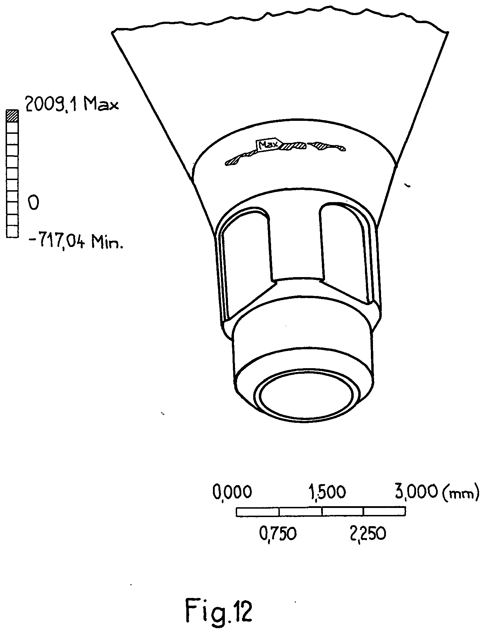

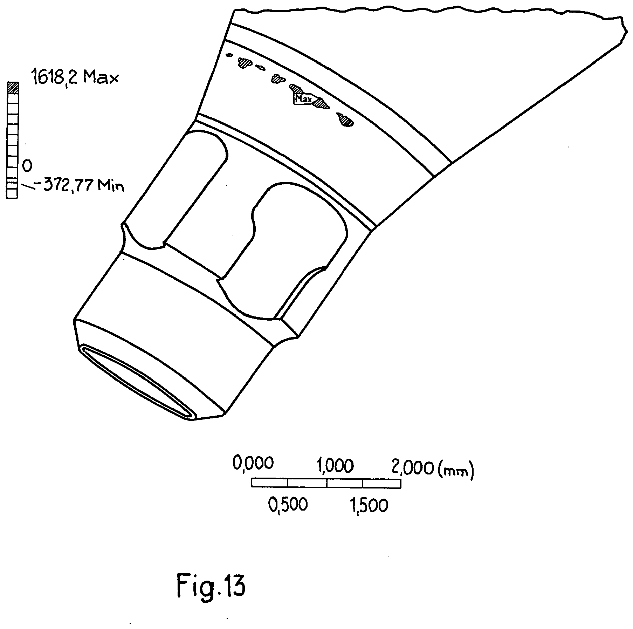

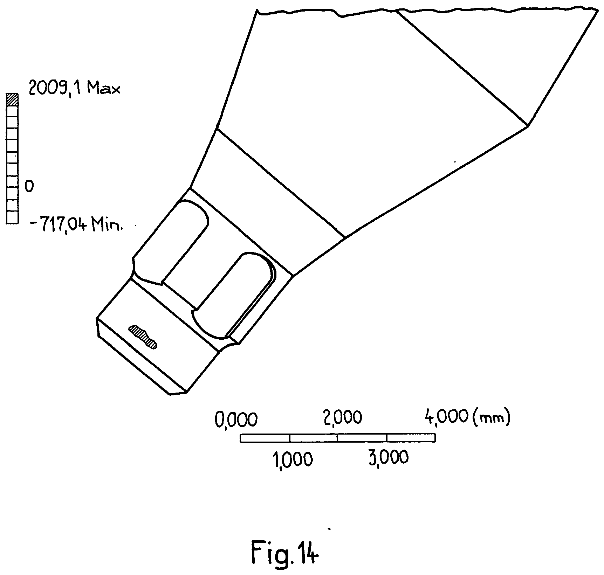

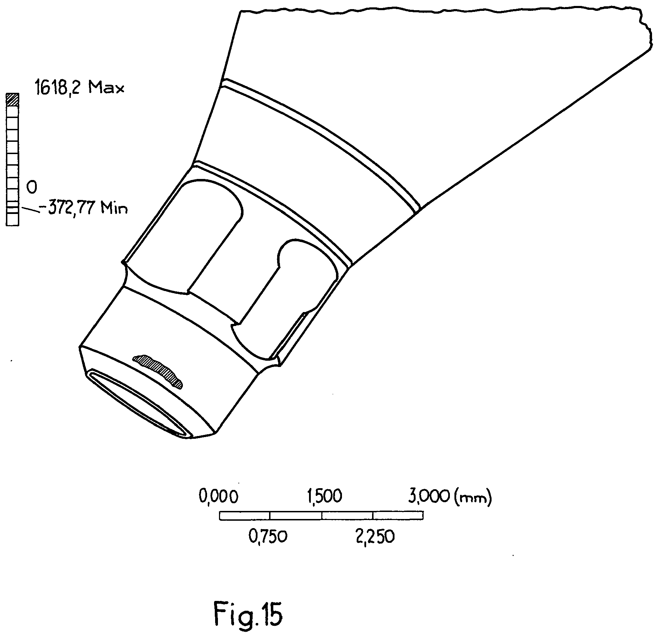

Aus Gründen der Anschaulichkeit wurde für die in den Fig. 12 bis 17 dargestellte Materialbeanspruchung von einer relativ hohen Kraft von 500 N ausgegangen, wobei für die als 100% definierte Spannung ein konkreter Wert von 1618.2 MPa erhalten wurde; analoge Materialbeanspruchungsunterschiede zwischen den erfindungsgemässen und den nicht-erfindungsgemässen Aufbauteilen werden - allerdings bei wesentlich tieferen Werten - auch bei einer für solche Tests üblichen Kraft von 240 N erhalten.

## Patentansprüche

1. Aufbauteil für ein Dentalimplantat (50) mit einem apikalen Ende (4) und einem dem apikalen Ende in Längsrichtung gegenüberliegend angeordneten koronalen Ende (6), wobei das Aufbauteil im Bereich des apikalen Endes (4) einen Aufnahmeabschnitt (8) aufweist, der dazu bestimmt ist, von einer Öffnung des Dentalimplantats aufgenommen zu werden, und der ein verdrehsicherungssegment (10) aufweist, das mindestens ein Verdrehsicherungselement (27a) umfasst, welches dazu bestimmt ist, mit einem entsprechenden Verdrehsicherungsgegenelement (53) des Dentalimplantats (50) zusammenzuwirken, und welches eine Nut (18', 18") umfasst, die sich von dem dem apikalen Ende (4) zugewandten Rand des Verdrehsicherungssegments (10) in koronaler Längsrichtung mit im Wesentlichen konstanter Nutenbreite über einen Nutenabschnitt (14) erstreckt, **dadurch gekennzeichnet, dass** die Nut (18' , 18") in einem an den Nutenabschnitt (14) anschliessenden Übergangsabschnitt (20) kontinuierlich aufgeweitet wird, um in einem an den Übergangsabschnitt (20) anschliessenden Anfasungsabschnitt (22) in eine Anfasung (24' , 24") überzugehen.

2. Aufbauteil nach Anspruch 1, **dadurch gekennzeichnet, dass** das Verdrehsicherungselement (27) dazu bestimmt ist, mit einem entsprechenden, in Richtung gegen das Innere der Öffnung des Dentalimplantats gerichteten Vorsprung (52', 52") zusammenzuwirken.

3. Aufbauteil nach Anspruch 2, **dadurch gekennzeichnet, dass** die Nutenbreite im Nutenabschnitt (14) derart ist, dass die Seitenflächen (56a, 56b) der Nut (18', 18") an der jeweiligen Seitenfläche (58a, 58b) des Vorsprungs (52', 52") wenigstens annähernd direkt aufliegen.

4. Aufbauteil nach einem der vorhergehenden Abschnitte, **dadurch gekennzeichnet, dass** wenigstens der Nutenabschnitt (14) zylinderförmig ausgestaltet ist.

5. Aufbauteil nach einem der vorhergehenden Ansprüche, **dadurch gekennzeichnet, dass** die Grundfläche (26', bzw. 26") der Nut (18' bzw. 18") und die Anfasung (24' bzw. 24") in derselben Ebene liegen.

6. Aufbauteil nach einem der vorhergehenden Ansprüche, **dadurch gekennzeichnet, dass** die Anfasung (24', 24") nicht bis zu dem dem koronalen Ende (6) zugewandten Rand (30) des Verdrehsicherungssegments (10) ausgebildet ist.

7. Aufbauteil nach Anspruch 6, **dadurch gekennzeichnet, dass** das Verdrehsicherungssegment (10) in seinem dem koronalen Ende (6) zugewandten Randbereich (32) kreiszylinderförmig ist.

8. Aufbauteil nach einem der vorhergehenden Ansprüche, **dadurch gekennzeichnet, dass** die kontinuierliche Aufweitung der Nut (18', 18") im Übergangsabschnitt (20) im Wesentlichen symmetrisch erfolgt.

9. Aufbauteil nach einem der vorhergehenden Ansprüche, **dadurch gekennzeichnet, dass** das Verdrehsicherungssegment (10) mehr als ein Verdrehsicherungselement (27a) umfasst, vorzugsweise zwei oder vier verdrehsicherungselemente.

10. Aufbauteil nach Anspruch 9, **dadurch gekennzeichnet, dass** zwei Verdrehsicherungselemente (27a) einander diametral gegenüberliegend angeordnet sind und dazwischen diametral einander gegenüberliegende zusätzliche Anfasungen (28', 28") als zusätzliche Verdrehsicherungselemente (27b) angeordnet sind.

11. Aufbauteil nach einem der vorhergehenden Ansprüche, **dadurch gekennzeichnet, dass** dieses eine sich vom koronalen Ende (6) zum apikalen Ende (4) hin erstreckende Ausnehmung (34) aufweist, die derart ausgestaltet ist, dass sie ein Befestigungselement aufnehmen kann, und die eine radial ins Innere der Ausnehmung (34) ragende konische Auflagefläche (40) aufweist, die dazu bestimmt ist, mit einer entsprechenden Gegenauflagefläche des Befestigungselements zusammenzuwirken.

12. Aufbauteil nach Anspruch 11, **dadurch gekennzeichnet, dass** der Konuswinkel der konischen Auflagefläche (40) im Bereich von 20 bis 40° liegt, und besonders bevorzugt etwa 30° beträgt.

13. Dentalimplantatsystem umfassend ein Aufbauteil (2) gemäss einem der Ansprüche 1 bis 12 und ein Dentalimplantat (50) mit einer Öffnung (48) zur Aufnahme des Aufnahmeabschnitts (8) des Aufbauteils (2), **dadurch gekennzeichnet, dass** das Dentalimplantat mindestens einen ins Innere der Öffnung (48) ragenden, ein Verdrehsicherungsgegenelement (53) bildenden Vorsprung (52', 52") aufweist, der dazu bestimmt ist, mit einem entsprechenden Verdrehsicherungselement (27) des Aufbauteils (2) zusammenzuwirken.

## Claims

1. An abutment for a dental implant (50), with an apical end (4) and with a coronal end (6) arranged opposite the apical end in the longitudinal direction, which abutment has, in the area of the apical end (4), an insert portion (8) which is designed to be received by an opening of the dental implant and which has an anti-rotation segment (10) comprising at least one anti-rotation element (27a) which is designed to cooperate with a corresponding mating anti-rotation element (53) of the dental implant (50) and comprising a groove (18', 18") which, from the edge of the anti-rotation segment (10) directed toward the apical end (4), extends in the coronal longitudinal direction along a groove portion (14) with a substantially constant groove width, wherein the groove (18', 18") is continuously widened in a transition portion (20) adjoining the groove portion (14), in order to merge into a bevel (24', 24") in a bevel portion (22) adjoining the transition portion (20).

2. The abutment as claimed in claim 1, wherein the anti-rotation element (27) is designed to cooperate with a corresponding projection (52', 52") directed toward the interior of the opening of the dental implant.

3. The abutment as claimed in claim 2, wherein the groove width in the groove portion (14) is such that the side faces (56a, 56b) of the groove (18', 18") bear at least approximately directly on the respective side face (58a, 58b) of the projection (52', 52").

4. The abutment as claimed in one of the preceding claims, wherein at least the groove portion (14) has a cylindrical shape.

5. The abutment as claimed in one of the preceding claims, wherein the bottom face (26', 26") of the groove (18', 18") and the bevel (24', 24") lie in the same plane.

6. The abutment as claimed in one of the preceding claims, wherein the bevel (24', 24") is not formed as far as the edge (30) of the anti-rotation segment (10) directed toward the coronal end (6).

7. The abutment as claimed in claim 6, wherein the anti-rotation segment (10) has a circular cylindrical shape in its edge area (32) directed toward the coronal end (6).

8. The abutment as claimed in one of the preceding claims, wherein the continuous widening of the groove (18', 18") in the transition portion (20) is effected substantially symmetrically.

9. The abutment as claimed in one of the preceding claims, wherein the anti-rotation segment (10) comprises more than one anti-rotation element (27a), preferably two or four anti-rotation elements.

10. The abutment as claimed in claim 9, wherein two anti-rotation elements (27a) are arranged lying diametrically opposite each other and, between them, additional bevels (28', 28") lying diametrically opposite each other are arranged as additional anti-rotation elements (27b).

11. The abutment as claimed in one of the preceding claims, wherein the abutment has a recess (34) which extends from the coronal end (6) to the apical end (4) and which is designed in such a way that it can receive a securing element, and it has a conical support face (40) which protrudes radially into the interior of the recess (34) and which is designed to cooperate with a corresponding mating support face of the securing element.

12. The abutment as claimed in claim 11, wherein the cone angle of the conical support face (40) is in the range of 20 to 40°, particularly preferably about 30°.

13. A dental implant system comprising an abutment (2) as claimed in one of claims 1 to 12 and a dental implant (50) with an opening (48) for receiving the insert portion (8) of the abutment (2), **characterized in that** the dental implant has at least one projection (52', 52'') which protrudes into the interior of the opening (48) and forms an anti-rotation mating element (53) and which is designed to cooperate with a corresponding anti-rotation element (27) of the abutment (2).

## Revendications

1. Pilier pour un implant dentaire (50), avec une extrémité apicale (4) et avec une extrémité coronale (6) disposée de façon opposée à l'extrémité apicale dans la direction longitudinale, le pilier présentant dans la zone de l'extrémité apicale (4) une partie de réception (8) qui est conçue pour être logée dans une ouverture de l'implant dentaire et qui présente un segment anti-rotation (10) comprenant au moins un élément anti-rotation (27a) qui est conçu pour coopérer avec un contre-élément anti-rotation (53) correspondant de l'implant dentaire (50) et comprenant une rainure (18', 18") qui, du bord du segment anti-rotation (10) dirigé vers l'extrémité apicale (4), s'étend dans la direction longitudinale coronale le long d'une partie de rainure (14) avec une largeur de rainure sensiblement constante, **caractérisé en ce que** la rainure (18', 18") est élargie continuellement dans une partie de transition (20) connectée à la partie de rainure (14) afin de se transformer en biseau (24', 24") dans une partie de biseau (22) connectée à la partie de transition (20).

2. Pilier selon la revendication 1, **caractérisé en ce que** l'élément anti-rotation (27) est conçu pour coopérer avec une saillie correspondante (52', 52'') dirigée vers l'intérieur de l'ouverture de l'implant dentaire.

3. Pilier selon la revendication 2, **caractérisé en ce que** la largeur de rainure dans la partie de rainure (14) est telle que les faces latérales (56a, 56b) de la rainure (18', 18") appuient au moins approximativement directement sur les faces latérales (58a, 58b) respectives de la saillie (52', 52").

4. Pilier selon l'une des revendications précédentes, **caractérisé en ce que** au moins la partie de rainure (14) présente une forme cylindrique.

5. Pilier selon l'une des revendications précédentes, **caractérisé en ce que** la face inférieure (26', 26") de la rainure (18', 18") et le biseau (24', 24") se trouvent dans le même plan.

6. Pilier selon l'une des revendications précédentes, **caractérisé en ce que** le biseau (24', 24") n'est pas formé jusqu'au bord (30) du segment anti-rotation (10) dirigé vers l'extrémité coronale (6).

7. Pilier selon la revendication 6, **caractérisé en ce que** le segment anti-rotation (10) présente une forme cylindrique circulaire dans zone de bord (32) dirigée vers l'extrémité coronale (6).

8. Pilier selon l'une des revendications précédentes, **caractérisé en ce que** l'élargissement continu de la rainure (18', 18") dans la partie de transition (20) a lieu de façon sensiblement symétrique.

9. Pilier selon l'une des revendications précédentes, **caractérisé en ce que** le segment anti-rotation (10) comprend plus d'un élément anti-rotation (27a), préférablement deux ou quatre élément anti-rotations.

10. Pilier selon la revendication 9, **caractérisé en ce que** deux éléments anti-rotations (27a) sont disposés diamétralement opposés l'un à l'autre et, entre eux, des biseaux (28', 28") additionnels diamétralement opposés l'un à l'autre sont disposés comme éléments anti-rotation (27b) additionnels.

11. Pilier selon l'une des revendications précédentes, **caractérisé en ce que** le pilier présente un évidement (34) qui s'étend de l'extrémité coronale (6) à l'extrémité apicale (4) et qui est conçu de telle façon qu'il peut recevoir un élément de fixation, et qu'il présente une surface d'appui conique (40) dépassant radialement dans l'intérieur de l'évidement (34) et étant conçue pour coopérer avec une contre-surface d'appui correspondante de l'élément de fixation.

12. Pilier selon la revendication 11, **caractérisé en ce que** l'angle de cône de la surface d'appui conique (40) est dans un domaine de 20 à 40°, de façon particulièrement préférée environ 30°.

13. Système d'implant dentaire comprenant un pilier (2) selon l'une des revendications 1 à 12 et un implant dentaire (50) avec une ouverture (48) pour recevoir la partie de réception (8) du pilier (2), **caractérisé en ce que** l'implant dentaire présente au moins une saillie (52', 52") qui dépasse dans l'intérieur de l'ouverture (48) et forme un contre-élément anti-rotation (53) correspondant et qui est conçu pour coopérer avec un élément anti-rotation (27) correspondant du pilier (2).
